# EUROPEAN PATENT SPECIFICATION

(11) **EP 3 878 747 B1**
(45) Date of publication and mention of the grant of the patent: **11.10.2023**
(21) Application number: 21162630.4
(22) Date of filing: 15.03.2021
(51) Int. Cl.: B64D 11/04, F24C 15/02

(54) **DOOR LATCH MECHANISM SYSTEM FOR VEHICLE**
TÜRVERRIEGELUNGSMECHANISMUSSYSTEM FÜR EIN FAHRZEUG
SYSTÈME DE MÉCANISME DE LOQUET DE PORTE POUR VÉHICULE

(30) Priority: 13.03.2020 US 202016818076; 10.07.2020 US 202016925853
(43) Date of publication of application: 15.09.2021
(73) Proprietor: Koninklijke Fabriek Inventum B.V., 3439 MG Nieuwegein (NL)
(72) Inventor: PANJER, Frederik A.S., 3953BW Maa Maarsbergen (NL)
(74) Representative: Dehns

(56) References cited:
- EP-A1- 2 796 647
- EP-A2- 0 659 965
- EP-A2- 1 983 131
- WO-A1-2019/129437
- CA-A1- 2 865 344
- GB-A- 398 941
- GB-A- 191 310 118
- US-A1- 2007 200 368
- US-A1- 2011 126 598

## Description

### TECHNICAL FIELD

The present application relates to door latch mechanisms for vehicles.

### BACKGROUND

Door latches for aircraft galley insert doors currently are manually latched. Crew members currently spend significant time latching doors during taxi, takeoff, turbulence, and landing. Document EP1983131 discloses a device for latching an aircraft galley oven door with a handle and two rotatable plates for moving rods upside and down. Further door latches are disclosed in WO 2019/129437, EP 2796647, CA 2865344, GB 10118, US 2007/200368, EP 0659965, GB 398941 and US 2011/126598.

### SUMMARY

In one aspect, there is provided a system as defined by claim 1.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system in according to the inventive concepts disclosed herein.
FIG. 2 is a view of an exemplary embodiment of an aircraft galley of the system of FIG. 1 according to the inventive concepts disclosed herein.
FIG. 3 is a view of an exemplary embodiment of an aircraft galley of the system of FIG. 1 according to the inventive concepts disclosed herein.
FIG. 4 is a view of an exemplary embodiment of an aircraft galley of the system of FIG. 1 according to the inventive concepts disclosed herein.
FIG. 5 is a view of an exemplary embodiment of a door of the system of FIG. 1 according to the inventive concepts disclosed herein.
FIG. 6 is a view of an exemplary embodiment of a door of the system of FIG. 1 according to the inventive concepts disclosed herein.
FIG. 7 is a view of an exemplary embodiment of a portion of a door of the system of FIG. 1 according to the inventive concepts disclosed herein.
FIG. 8 is a view of an exemplary embodiment of a portion of a door of the system of FIG. 1 according to the inventive concepts disclosed herein.
FIG. 9 is a view of an exemplary embodiment of an aircraft galley insert of the system of FIG. 1 according to the inventive concepts disclosed herein.
FIG. 10 is a view of an exemplary embodiment of an aircraft galley insert of the system of FIG. 1 according to the inventive concepts disclosed herein.
FIG. 11 is a view of an exemplary embodiment of a portion of an aircraft galley insert of the system of FIG. 1 according to the inventive concepts disclosed herein.
FIG. 12 is a view of an exemplary embodiment of an aircraft galley insert of the system of FIG. 1 according to the inventive concepts disclosed herein.
FIG. 13 is a view of an exemplary embodiment of a portion of an aircraft galley insert of the system of FIG. 1 according to the inventive concepts disclosed herein.
FIG. 14 is a view of an exemplary embodiment of a portion of a door including a primary latch mechanism in a latched position of the system of FIG. 1 according to the inventive concepts disclosed herein.
FIG. 15 is a view of the primary latch mechanism of FIG. 14 in a neutral position according to the inventive concepts disclosed herein.
FIG. 16 is a view of the primary latch mechanism of FIG. 14 in an unlatched position according to the inventive concepts disclosed herein.
FIG. 17 is a view of a portion of the primary latch mechanism of FIG. 14 according to the inventive concepts disclosed herein.
FIG. 18 is a view of a portion of the primary latch mechanism of FIG. 14 according to the inventive concepts disclosed herein.
FIG. 19 is a view of a portion of the primary latch mechanism of FIG. 14 according to the inventive concepts disclosed herein.
FIG. 20 is a view of a portion of the primary latch mechanism of FIG. 14 according to the inventive concepts disclosed herein.
FIG. 21 is a view of a portion of the primary latch mechanism of FIG. 14 according to the inventive concepts disclosed herein.
FIG. 22 is a view of a portion of the primary latch mechanism of FIG. 14 according to the inventive concepts disclosed herein.
FIG. 23 is a view of a portion of the primary latch mechanism of FIG. 14 according to the inventive concepts disclosed herein.
FIG. 24 is a view of a portion of the primary latch mechanism of FIG. 14 according to the inventive concepts disclosed herein.
FIG. 25A is a view of an exemplary embodiment of a portion of a door including a secondary latch mechanism in an unlocked position of the system of FIG. 1 according to the inventive concepts disclosed herein.
FIG. 25B is a view of the secondary latch mechanism of FIG. 25A in a locked position according to the inventive concepts disclosed herein.
FIG. 26 is a view of a portion of the secondary latch mechanism of FIG. 25A in a locked position according to the inventive concepts disclosed herein.
FIG. 27 is a view of a portion of the secondary latch mechanism of FIG. 25A in a locked position according to the inventive concepts disclosed herein.
FIG. 28 is a view of a portion of the secondary latch mechanism of FIG. 25A in a locked position according to the inventive concepts disclosed herein.
FIG. 29 is a view of a secondary latch button of the secondary latch mechanism of FIG. 25A according to the inventive concepts disclosed herein.
FIG. 30 is a view of a lever of the secondary latch mechanism of FIG. 25A according to the inventive concepts disclosed herein.
FIG. 31 is a view of an extension rod of the secondary latch mechanism of FIG. 25A according to the inventive concepts disclosed herein.
FIG. 32 is a view of a portion of an end piece of the secondary latch mechanism of FIG. 25A according to the inventive concepts disclosed herein.
FIG. 33 is a view of the end piece of FIG. 32 of the secondary latch mechanism of FIG. 25A according to the inventive concepts disclosed herein.
FIG. 34 is a view of the secondary latch mechanism of FIG. 25A in an unlocked position according to the inventive concepts disclosed herein.
FIG. 35 is a view of the secondary latch mechanism of FIG. 25A in a locked position according to the inventive concepts disclosed herein.
FIG. 36 is a view of the primary latch mechanism of FIG. 14 and an associated sensor according to the inventive concepts disclosed herein.
FIG. 37 is a view of the primary latch mechanism of FIG. 14 and an associated sensor according to the inventive concepts disclosed herein.

### DETAILED DESCRIPTION

Before explaining at least one embodiment of the inventive concepts disclosed herein in detail, it is to be understood that the scope of the invention is limited only by the claims. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways, within the scope of the claims.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

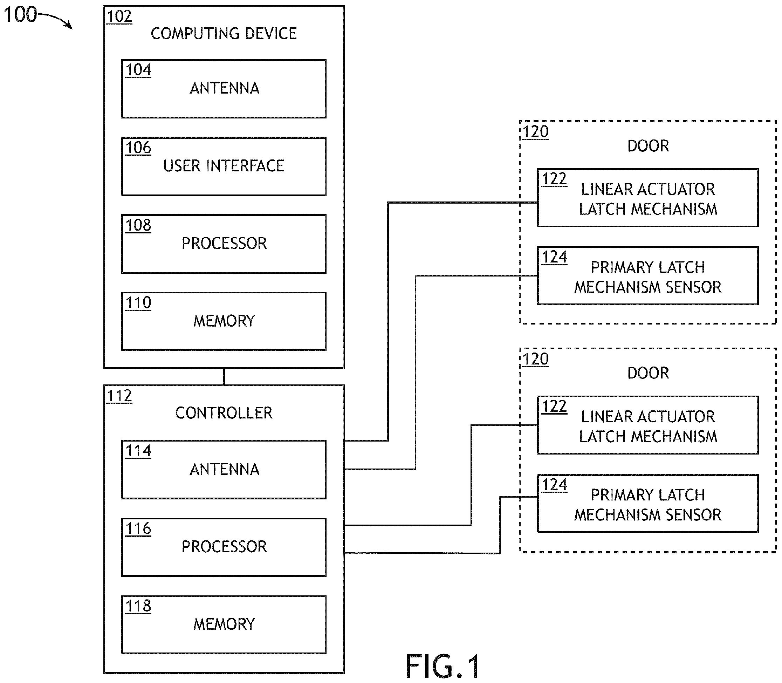

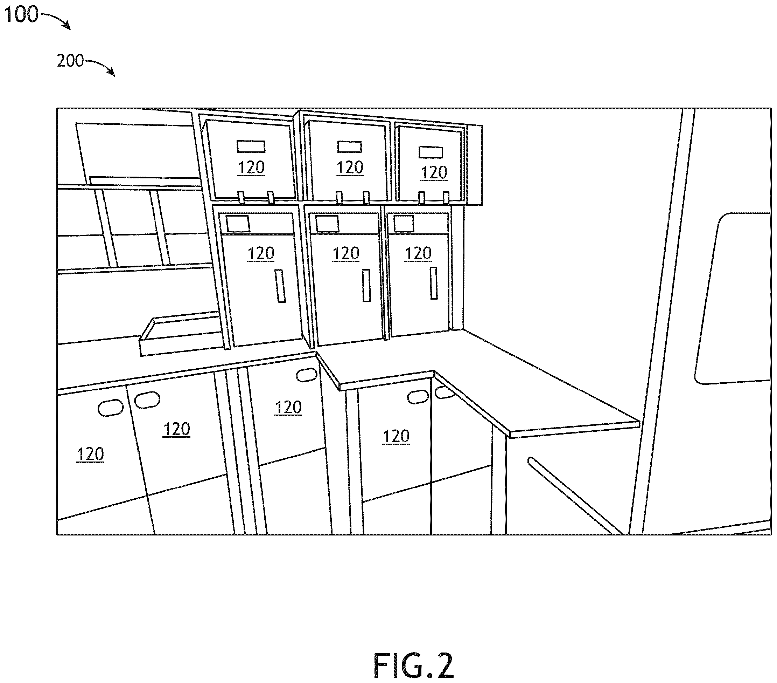

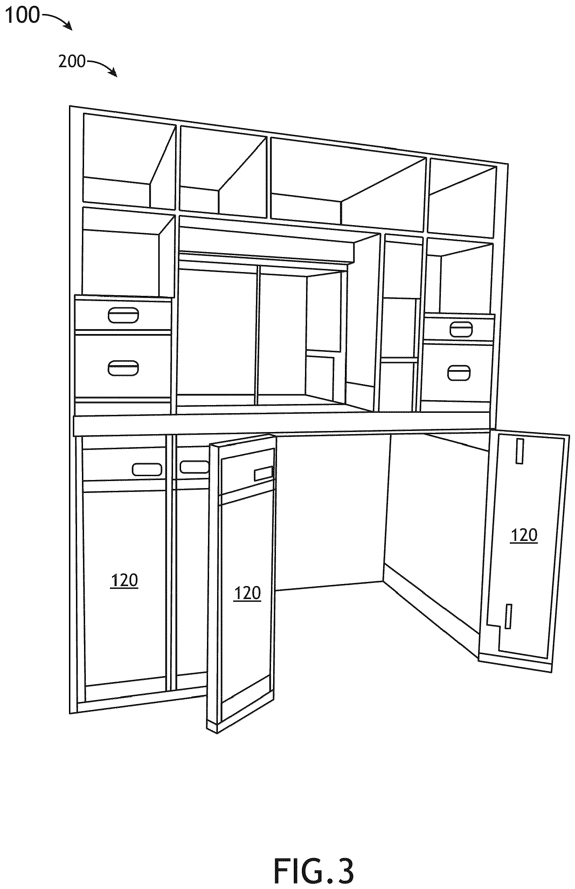

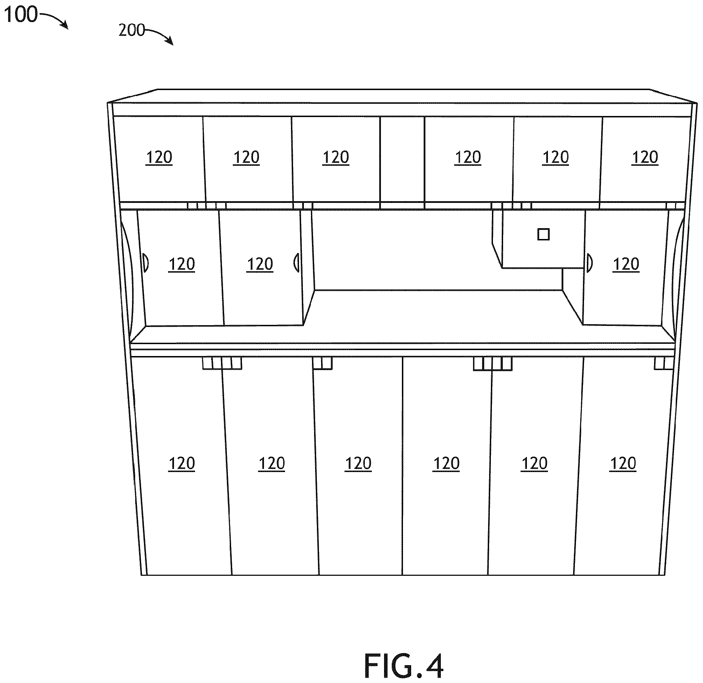

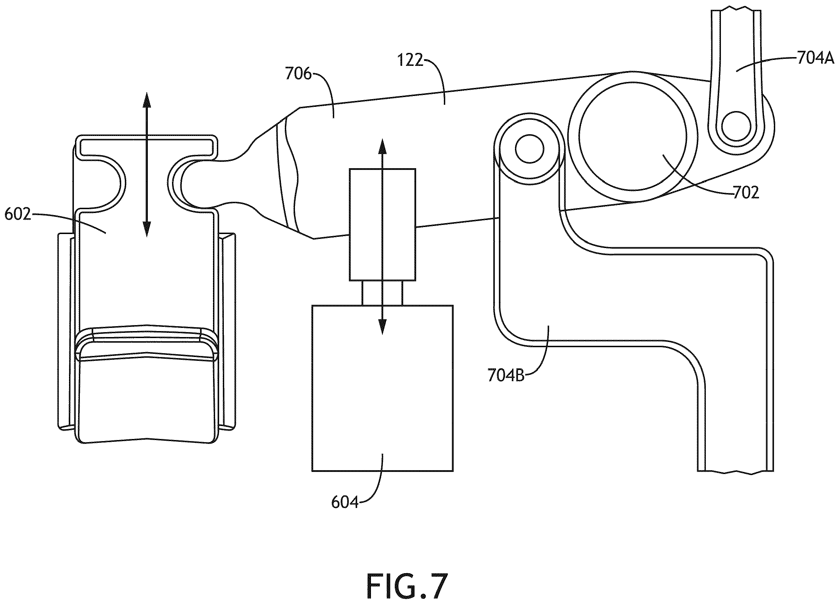

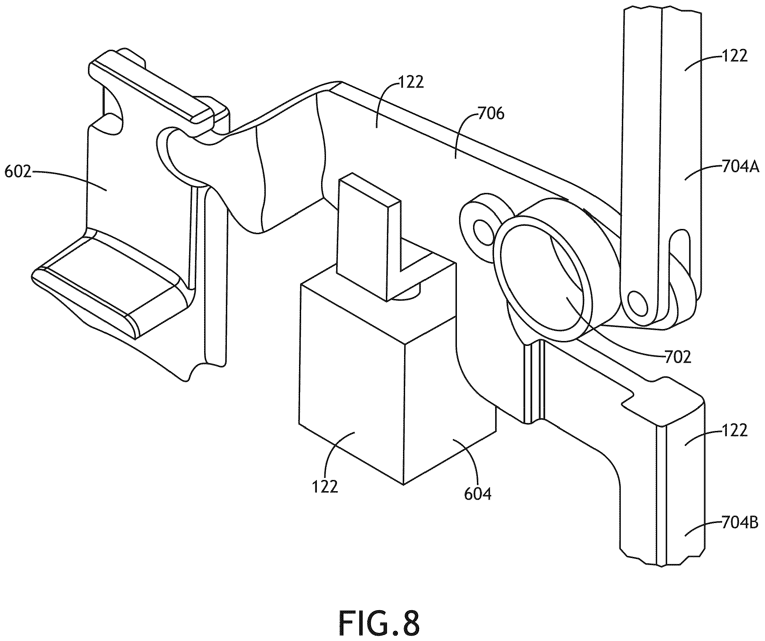

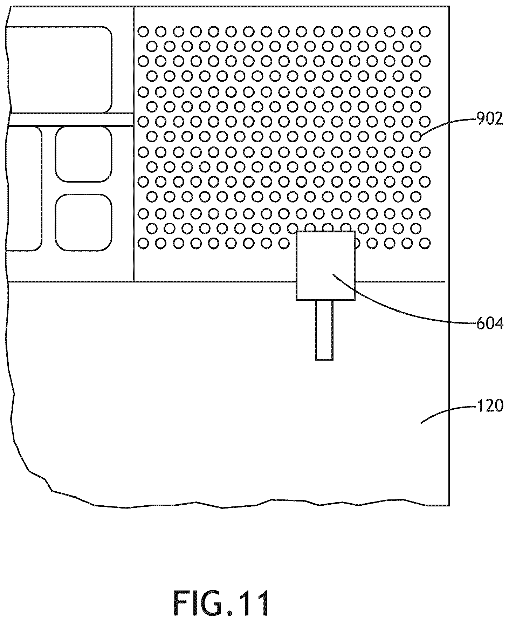

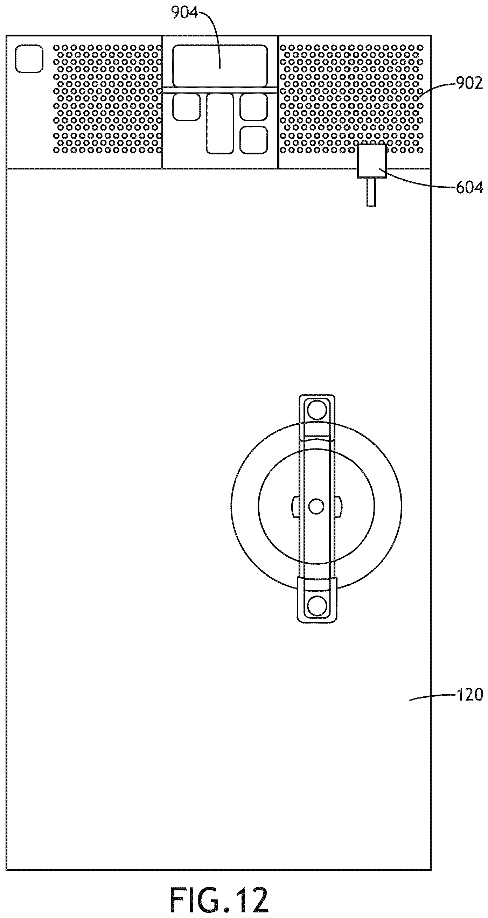

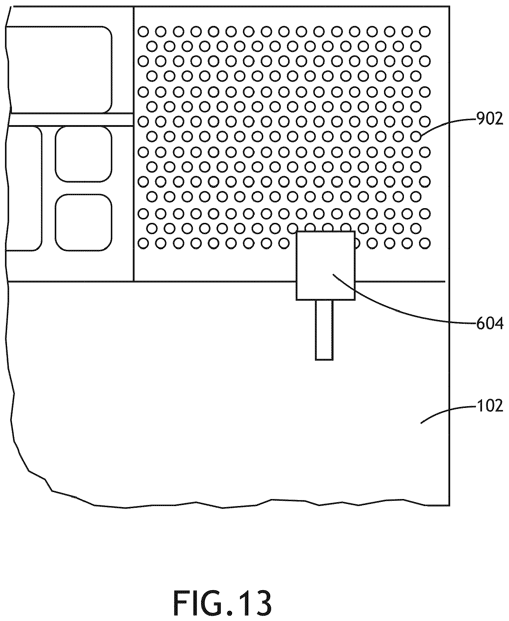

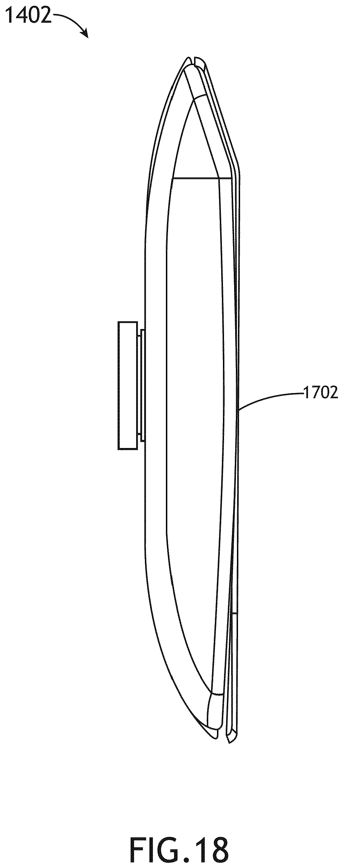

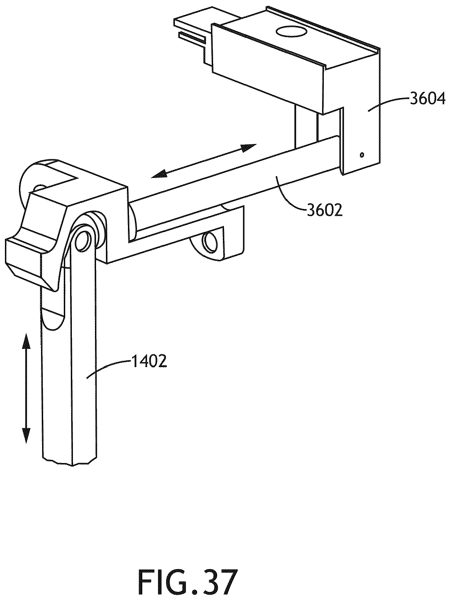

Referring now to FIGS. 1-37, exemplary embodiments of a system including a vehicle (e.g., an automobile, a train, a watercraft, a submarine, or an aircraft 100) are depicted according to the inventive concepts.

The vehicle (e.g., the aircraft 100) may include at least one vehicle galley (e.g., at least one aircraft galley 200), at least one computing device 102, at least one controller 112, at least one door 120, at least one linear actuator latch mechanism 122, and/or at least one primary latch mechanism sensor 124, some or all of which may be communicatively coupled (e.g., wiredly communicatively coupled or wirelessly communicatively coupled; e.g., directly communicatively coupled and/or communicatively coupled via an intermediate communicatively coupled device) at any given time.

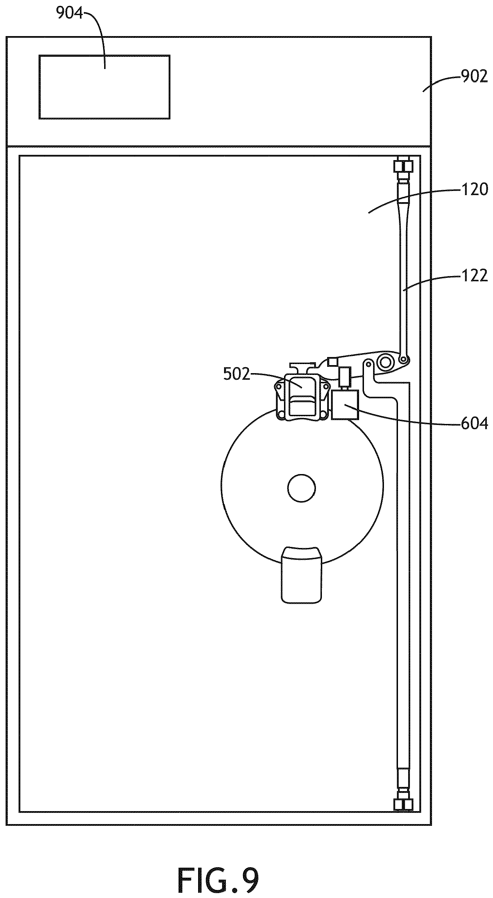

For example, the vehicle galley (e.g., the aircraft galley 200) may include cabinets and/or vehicle galley inserts (e.g., aircraft galley inserts, such as galley insert ovens or galley insert refrigerators), as well as other components commonly found in galleys. Such cabinets may include doors 120 (e.g., cabinet doors), at least one linear actuator latch mechanism 122, and/or at least one primary latch mechanism sensor 124. Each of such vehicle galley inserts (e.g., aircraft galley inserts) may include at least one door 120 (e.g., a vehicle galley insert door, such as an aircraft galley insert door), a housing 902 (as shown in FIG. 9), a user interface 904 (as shown in FIG. 9), at least one controller 112, at least one door 120, at least one linear actuator latch mechanism 122, and/or at least one primary latch mechanism sensor 124, some or all of which may be communicatively coupled with one or more components of the system.

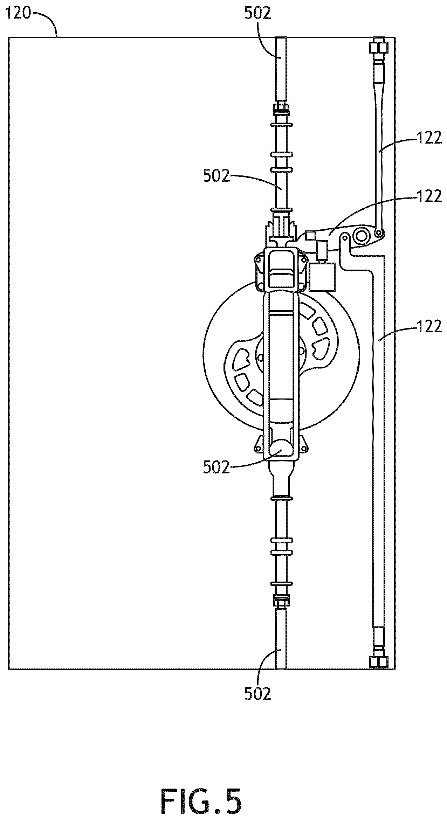

The doors 120 may be installed in the vehicle (e.g., the aircraft 100). While the doors are exemplarily described and shown as being aircraft cabinet doors and aircraft galley insert doors, the doors 120 may be any door located within a vehicle (e.g., the aircraft 100). In some embodiments, the door 120 may include a primary latch mechanism 502 (e.g., as shown in FIGS. 5 and 9-10), at least one controller 112, at least one linear actuator latch mechanism 122, and/or at least one primary latch mechanism sensor 124; however, in some embodiments, some of such components (e.g., at least one linear actuator latch mechanism 122, at least one controller 112, and/or at least one primary latch mechanism sensor 124) may be installed outside of the door 120 (e.g., in proximity to the door 120).

The primary latch mechanism sensor 124 may be configured to detect whether the door 120 is in a latched state or an unlatched state and to output state data to the controller 112 and/or the computing device 102. In some embodiments, the primary latch mechanism sensor 124 may be configured to detect whether the door 120 is in an open state or a closed state and to output door state data to the controller 112 and/or the computing device 102.

In some embodiments, the primary latch mechanism 502 may be the primary way in which a user unlatches the door 120 to open the door 120. The primary latch mechanism 502 may include a manual latch actuator 602 that may be manipulated by a user to latch or unlatch the door 120. In some embodiments, a primary latch mechanism sensor 124 may be configured to detect whether the primary latch mechanism 502 is in a primary latch latched state or a primary latch unlatched state. The primary latch mechanism 502 may be (a) installed in or on the door 102 or (b) installed within the vehicle in proximity to the door 120, the primary latch mechanism sensor 124 communicatively coupled to the computing device 102 and/or the controller 112.

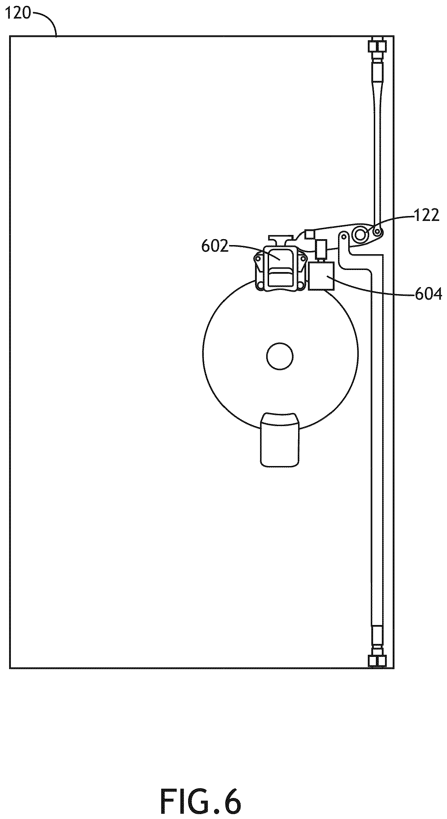

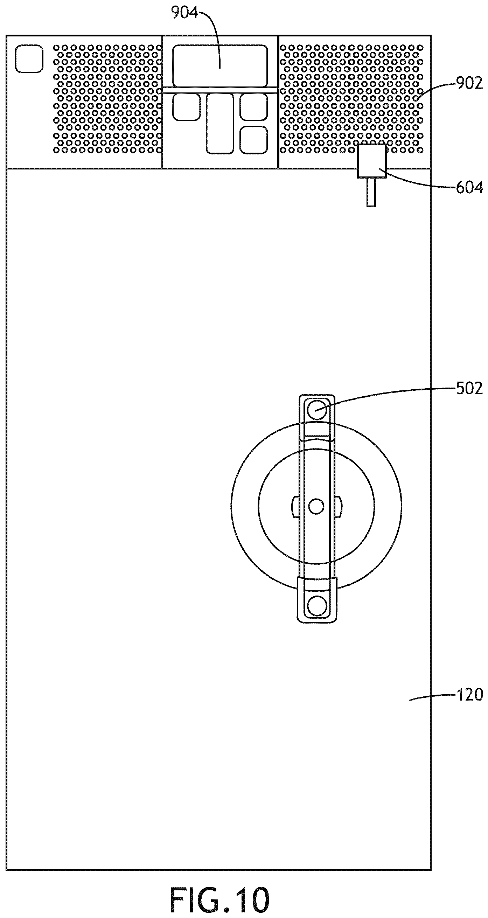

In some embodiments, the electronically actuated linear actuator latch mechanism 122 may be (a) installed in or on one of the doors 120 or (b) installed within the vehicle (e.g., the aircraft 100) in proximity to the door 120 (e.g., in a housing 902 of the door 120, as shown in FIG. 10), wherein the electronically actuated linear actuator latch mechanism 122 may cause the door 120 to be in a latched state and to cause the door to be in an unlatched state. In some embodiments, the electronically actuated linear actuator latch mechanism 122 may be a linear solenoid actuator latch mechanism. The electronically actuated linear actuator latch mechanism 122 may be or may include a linear actuator (e.g., a linear solenoid 604) configured to extend and retract linearly, based at least on electronic signals received from the controller 112 and/or the computing device 102, such that the linear actuator latch mechanism 122 latches or unlatches the door 120, for example, as shown in FIGS. 6-13. In some embodiments, the electronically actuated linear actuator latch mechanism 122 can be actuated manually by hand or electrically via the linear actuator (e.g., a linear solenoid 604). The linear actuator (e.g., a linear solenoid 604) may also function as a sensor to detect the state of the latch. In some embodiments, the electronically actuated linear actuator latch mechanism 122 may also include a pivot 702, a pivot arm 706, a first latch rod 704A, and/or a second latch rod 704B, such as illustrated and described with respect to embodiments depicted in FIGS. 5-9. For example, the pivot arm 706 may pivot about the pivot 702 when the linear actuator (e.g., a linear solenoid 604) extends or retracts. A first end of the pivot arm 706 may engage with the manual latch actuator 602. A second end of the pivot arm 706 may be coupled to the first latch rod 704A and the second latch rod 704B, such that the first latch rod the first latch rod 704A and the second latch rod 704B latch the door 120 when the linear actuator (e.g., a linear solenoid 604) is in a first state and unlatch the door 120 when the linear actuator (e.g., a linear solenoid 604) is in a second state. In some embodiments, such as shown in FIGS. 10-11, the electronically actuated linear actuator latch mechanism 122 may be installed outside of the door 120 (e.g., in a housing abutting and/or in proximity to the door 120) such that a rod portion of the electronically actuated linear actuator latch mechanism 122 may engage with the door 120 in the latched state and disengage with the door 120 in the unlatched state. In some embodiments, the electronically actuated linear actuator latch mechanism 122 may be considered to be a secondary latch mechanism and/or an independent latch mechanism.

The controller 112 may include at least one antenna 114, at least one processor 116, and/or at least one memory 118, which may be communicatively coupled. The at least one processor 116 may be implemented as any suitable type and number of processors. For example, the at least one processor 116 may include at least one general purpose processor (e.g., at least one central processing unit (CPU)), at least one digital signal processor (DSP), at least one application specific integrated circuit (ASIC), and/or at least one field-programmable gate array (FPGA). The at least one processor 116 may be configured to perform (e.g., collectively perform if more than one processor) any or all of the operations disclosed throughout. The processor 116 may be configured to run various software and/or firmware applications and/or computer code stored (e.g., maintained) in a non-transitory computer-readable medium (e.g., memory 118) and configured to execute various instructions or operations. For example, the controller 112 may be communicatively coupled (e.g., wiredly communicatively coupled or wirelessly communicatively coupled via the antenna 114) with the computing device 102, the at least one linear actuator latch mechanism 122, and/or the at least one primary latch mechanism sensor 124, at any given time. For example, the controller 112 may output data received from the at least one linear actuator latch mechanism 122, and/or the at least one primary latch mechanism sensor 124 to the computing device 102. For example, the controller 112 may receive instructions or signals from the computing device 102 and cause one, some, or all of the at least one door 120 to be in latched state or an unlatched state.

The computing device 102 may include at least one antenna 104, at least one user interface 106, at least one processor 108, and at least one memory 110, which may be communicatively coupled. The computing device 102 may be any suitable computing device, such as a vetronics computing device (e.g., an avionics computing device) or a mobile computing device (e.g., a laptop computing device, a phone computing device, and/or a tablet computing device). For example, the computing device 102 may be a hand-held computing device used by crew members to check a status of one, some, all of latch/unlatched states of doors 120 in the vehicle and to change one, some, all of latch/unlatched states of doors 120 in the vehicle. The at least one processor 108 may be implemented as any suitable type and number of processors. For example, the at least one processor 108 may include at least one general purpose processor (e.g., at least one central processing unit (CPU)), at least one digital signal processor (DSP), at least one application specific integrated circuit (ASIC), and/or at least one field-programmable gate array (FPGA). The at least one processor 108 may be configured to perform (e.g., collectively perform if more than one processor) any or all of the operations disclosed throughout. The processor 108 may be configured to run various software and/or firmware applications and/or computer code stored (e.g., maintained) in a non-transitory computer-readable medium (e.g., memory 110) and configured to execute various instructions or operations. For example, the computing device 102 may be communicatively coupled (e.g., wiredly communicatively coupled or wirelessly communicatively coupled via the antenna 104; e.g., directly communicatively coupled and/or communicatively coupled via an intermediate communicatively coupled device) with the controller 112, the at least one linear actuator latch mechanism 122, and/or the at least one primary latch mechanism sensor 124, at any given time. The user interface 106 may be and/or may include at least one display, at least one microphone, at least one speaker, at least one vibration, at least one light, at least one button, and/or at least one camera, and the user interface 106 interface may be configured to interface with a user to receive user inputs and to present information to the user. For example, the computing device 102 may send and receive data to and from the controller 112, the actuator latch mechanism 122, and/or the at least one primary latch mechanism sensor 124 to the computing device 102. For example, the computing device 102 may receive status information from the controller 112, the actuator latch mechanism 122, and/or the at least one primary latch mechanism sensor 124 and output instructions or signals to cause one, some, or all of the at least one linear actuator latch mechanism 122 to be in latched state or an unlatched state.

For example, the computing device 102 may be configured to: determine whether the door 120 is in the latched state or the unlatched state; and cause the electronically actuated linear actuator latch mechanism 122 to switch from a determined state to a different state of the latched state and the unlatched state (e.g., by controlling the electronically actuated linear actuator latch mechanism 122).

For example, the computing device 102 may be configured to: present, to a user, information related to the determined state of the door 120; and receive a user input instructing the computing device 102 to cause the electronically actuated linear actuator latch mechanism 122 to switch from the determined state to the different state of the latched state and the unlatched state. For example, the computing device 102 may be configured to: present, to the user via the user interface 106, information related to a detected state of the primary latch mechanism 502.

For example, the computing device 102 may be configured to: obtain vehicle state data from another computing device (e.g., similarly configured to computing device 102) onboard the vehicle; and cause the electronically actuated linear actuator latch mechanism 122 to be in the latched state based at least on the vehicle state data. For example, the vehicle state data may be aircraft state data, and the aircraft state data may be associated with at least one of taxi, takeoff, turbulence, or landing.

In some embodiments, the computing device 102 may be configure to receive status information associated with any number of doors 120. For example, a second door 120 may be installed within the vehicle and a second electronically actuated linear actuator latch mechanism 122 may be (a) installed in or on the second door 120 or (b) installed within the vehicle in proximity to the second door 120, wherein the second electronically actuated linear actuator latch mechanism 122 may cause the second door 120 to be in a second latched state and to cause the second door 120 to be in a second unlatched state. The computing device 102 may be configured to: determine whether the second electronically actuated linear actuator latch mechanism 122 is in the second latched state or the second unlatched state; and cause the second electronically actuated linear actuator latch mechanism 122 to switch from a second determined state to a different second state of the second latched state and the second unlatched state. In some embodiments, the computing device 102 may be further configured to control a state of the electronically actuated linear actuator latch mechanism 122 independent of controlling a second state of the second electronically actuated linear actuator latch mechanism 122.

In some embodiments, the computing device's 102 causing of the electronically actuated linear actuator latch mechanism 122 to switch from the determined state to the different state of the latched state and the unlatched state may be manually overridable by a user.

In some embodiments, the computing device 102 may be wirelessly communicatively coupled to the electronically actuated linear actuator latch mechanism 122.

In some embodiments, the computing device 102 may be further configured to: cause the electronically actuated linear actuator latch mechanism 122 to be in the unlatched state while the door 120 is open.

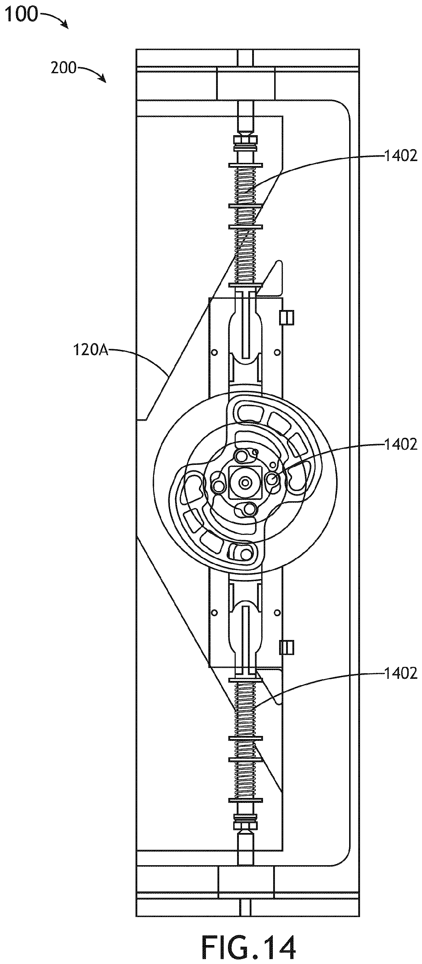

Referring now to FIGS. 14-37, exemplary embodiments of a system including a door 120 (e.g., an oven door 120A of the aircraft galley 200 of the aircraft 100) having at least one latch mechanism (e.g., a first latch mechanism (e.g., a primary latch mechanism 1402) and/or a secondary latch mechanism 2502) are depicted according to the inventive concepts.

Referring now to FIGS. 14-24, an exemplary embodiment of the oven door 120A including the primary latch mechanism 1402 is shown. The primary latch mechanism 1402 may be implemented similarly to the primary latch mechanism 502 of FIGS. 5 and 9-10 in many aspects. The primary latch mechanism 1402 may be manually operated by rotation of the door handle 1702 on the front of the oven door 120A. The primary latch mechanism 1402 may have multiple positions, such as a latched position, a neutral position, and an unlatched position as shown in FIGS. 14-16.

Referring now to FIG. 14, a portion of the primary latch mechanism 1402 in a latched position is shown.

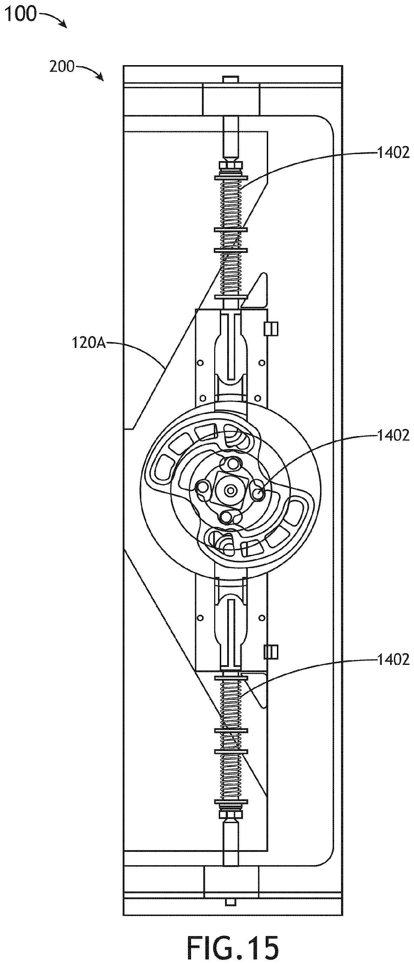

Referring now to FIG. 15, a portion of the primary latch mechanism 1402 in a neutral position is shown.

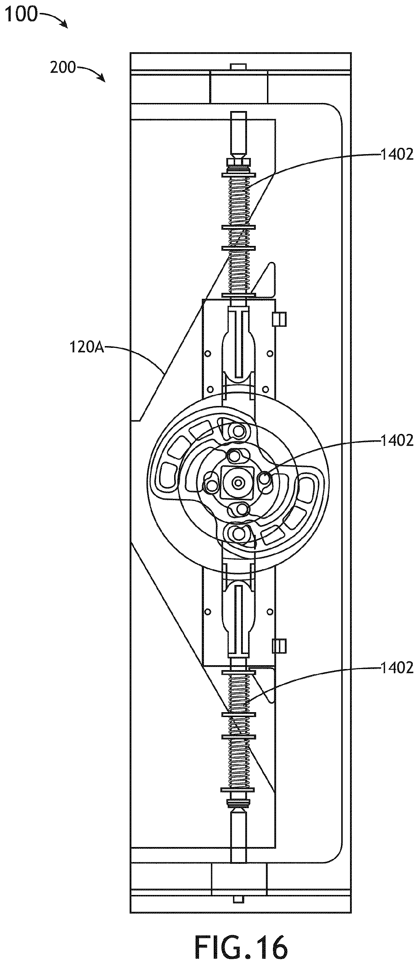

Referring now to FIG. 16, a portion of the primary latch mechanism 1402 in an unlatched position is shown.

Referring now to FIGS. 14-16, if the primary latch mechanism 1402 is moved from the latched or unlatched state, the primary latch mechanism 1402 may automatically move to the neutral state. In the neutral state, the latch still may retain the door 120A in the oven because the primary latch mechanism 1402 may not retract far enough by itself. The operator may have to force the primary latch mechanism 1402 through the neutral position to fully unlatch the door 120A. The purpose of the neutral state may be to protect the operator from the environment in the oven cavity if the primary latch mechanism 1402 is unlatched, either intentionally or unintentionally, and thus prevents the door 120A from completely opening.

Referring now to FIGS. 14-16, the primary latch mechanism 1402 may include at least one handle 1702, at least one rotatable plate (e.g., a curve disc 1704), at least one extension rod 2202, at least one compression spring 2204, and/or at least one end piece.

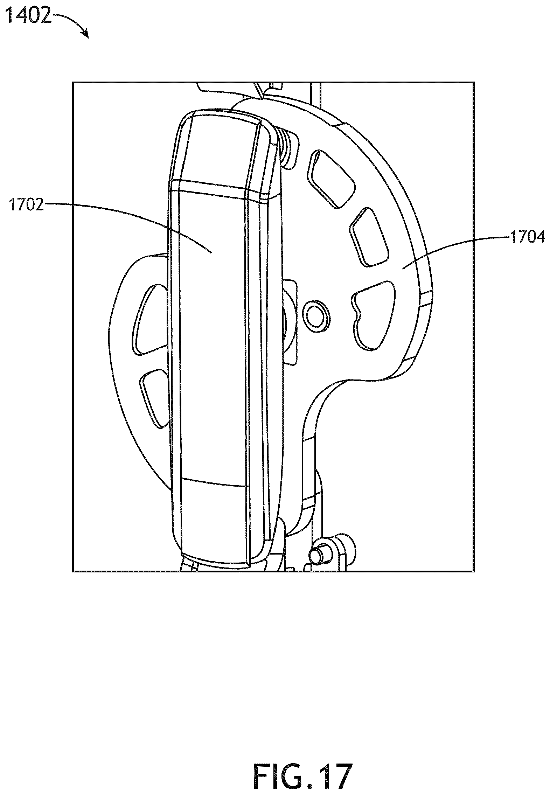

Referring now to FIGS. 17-18, the handle 1702 may be a lever that an operator actuates to move the primary latch mechanism 1402. The handle 1702 may be connected to the curve disc 1704.

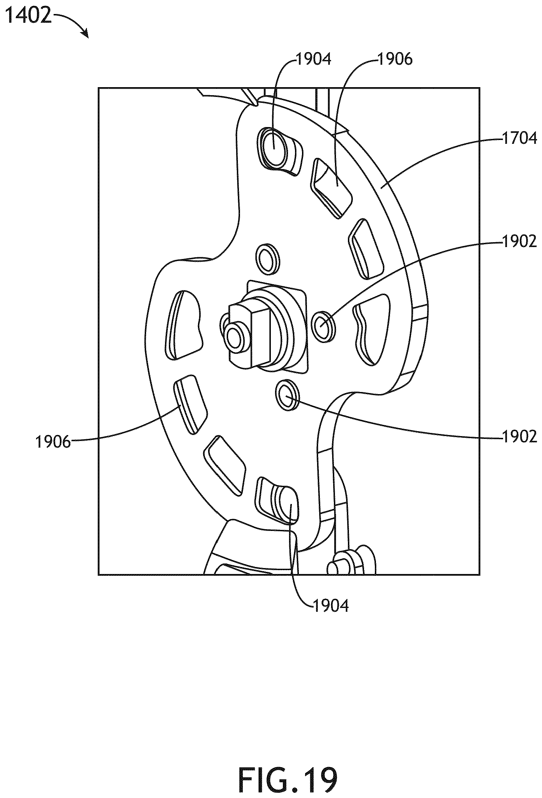

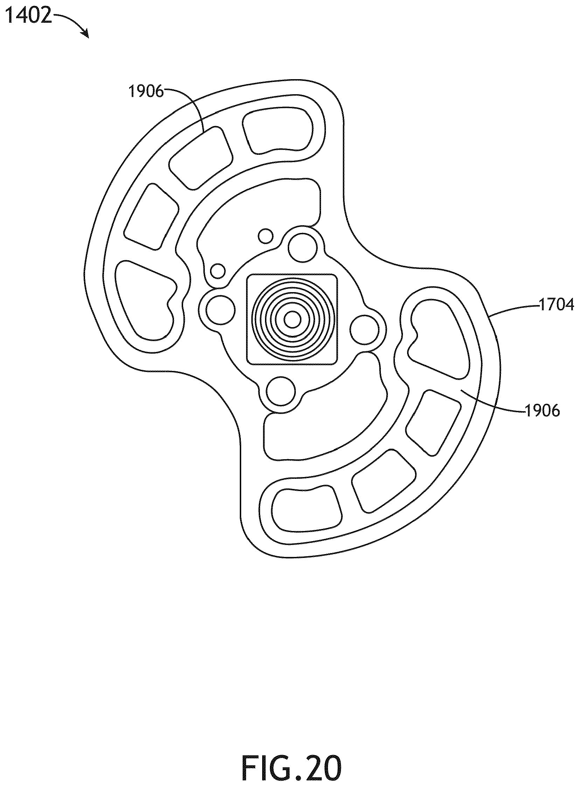

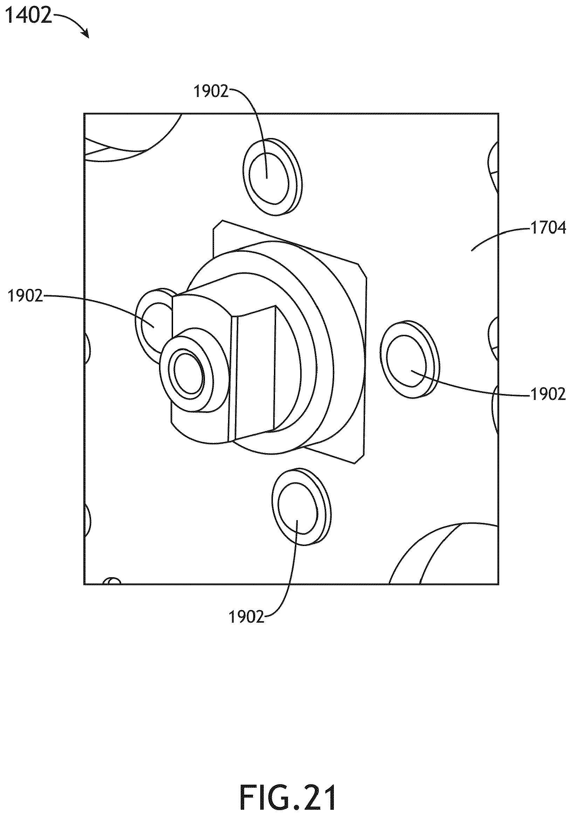

Referring now to FIGS. 19-21, the rotatable plate (e.g., the curve disc 1704) may convert a rotational movement of the handle 1702 to linear movement of the extension rods 2202. The rotatable plate may have any suitable shape, such as square, circular, or partially circular. The rotatable plate may have at least one (e.g., four) spring plunger 1902 attached to the rotatable plate. The spring plungers 1902 may retain the primary latch mechanism 1402 in a neutral or latched position when the primary latch mechanism 1402 is not forced into the unlatched position. FIG. 19 shows a handle-side view of the curve disc 1704. FIG. 20 shows a non-handle-side view of the curve disc 1704. FIG. 21 shows a further view of the handle-side of the curve disc 1704 having an attachment component that connects to the handle 1702. The curve disc 1704 may have a pair of channels 1906 (e.g., recessed channels) for engaging with bearings 1904 of the extension rods 2202 such that the bearings 1904 move through the channels 1906 when the handle 1702 is rotated to move the primary latch mechanism 1402 to a different position. The pins 1904 may move through the channels 1906.

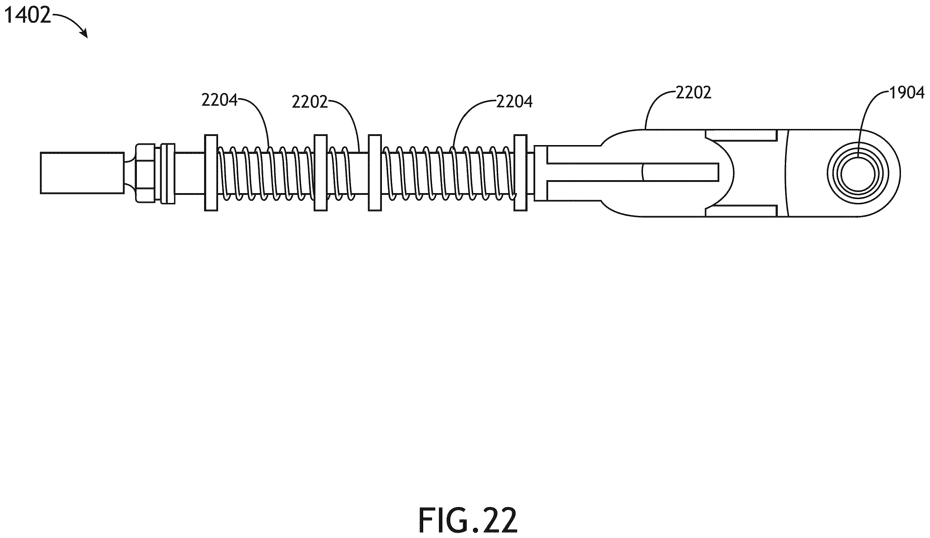

Referring now to FIG. 22, the extension rods 2202 may extend between the end pieces 2402 and the curve disc 1704. The extension rods 2202 may be connected to the end pieces 2402 and may engage with the channels 1906 (e.g., curved channels) of the curve disc 1704. The extension rods 2202 may include the bearings 1904 (e.g., roller bearings) that may move through the channels 1906 when the handle 1702 is rotated to move the primary latch mechanism 1402 to a different position. The bearings 1904 (e.g., roller bearings) may reduce friction during the transfer of energy from rotation to linear.

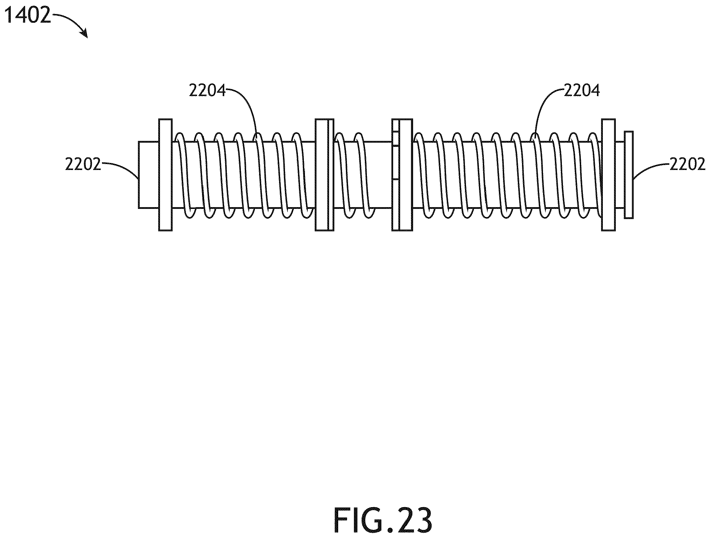

Referring now to FIG. 23, the extension rods 2202 may extend through the compression springs 2204. The compression springs 2204 may maintain the neutral position of the primary latch mechanism 1402 by accumulating energy when the primary latch mechanism 1402 is placed in the unlatched or latched state and by returning that energy when the primary latch mechanism 1402 is reversed.

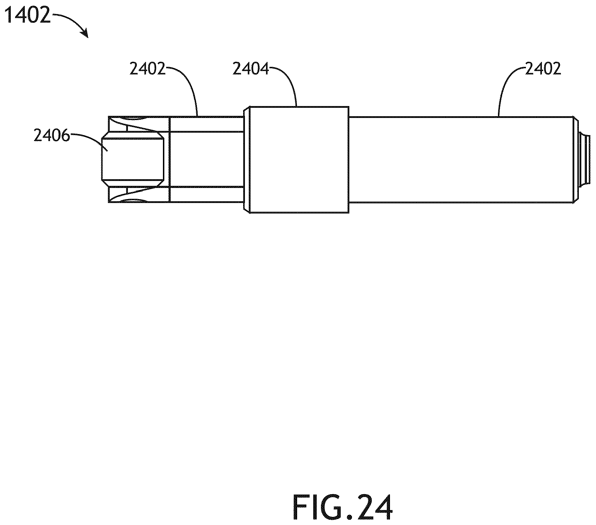

Referring now to FIG. 24, the end pieces 2402 may extend out of the door 120A and may be retained in the oven. A tip of the end piece 2402 may include a roller 2406 mounted to the end piece 2402 to reduce friction when the end piece 2402 is extended into the oven. The linear movement of the end pieces 2402 may be guided by slide bearings 2404. The rollers 2406 may also include a slide bearing to reduce friction.

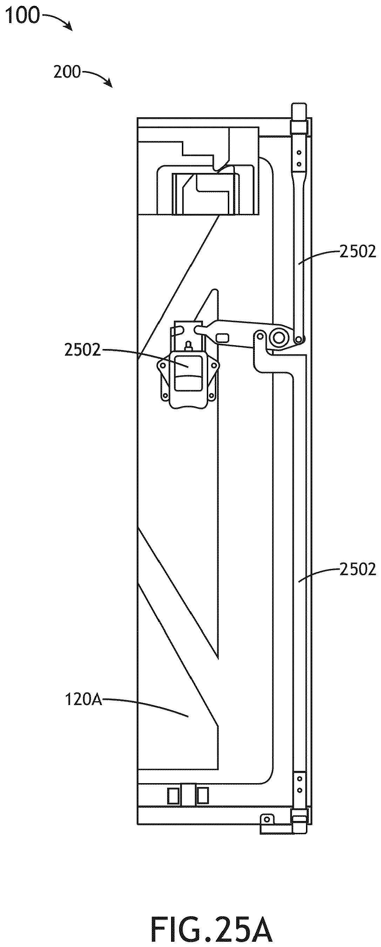

Referring now to FIGS. 25A-35, an exemplary embodiment of the oven door 120A including the secondary latch mechanism 2502 is shown. The secondary latch mechanism 2502 may be implemented similarly to the electronically actuated linear actuator latch mechanism 122 of FIGS. 5-9 in many aspects, except that the secondary latch mechanism 2502 does not need an electronic linear actuator.

The secondary latch mechanism 2502 may include a secondary latch button 2706, at least one lever 2708, at least one extension rod 2710, 2712, at least one slide bearing 2602, and/or at least end piece 3202. The secondary latch mechanism 1502 may be manually operated by moving the secondary latch button 2706 on the front of the oven door 120A, for example, by moving the secondary latch button 2706 up to an unlatched position or down to a latched position, or vice versa. Movement of the secondary latch button 2706 may be transferred by a lever 2708 to the extension rods 2710, 2712 by the lever 2708 swiveling around a rotation point. The extension rods 2710, 2712 may be connected to the lever 2708. The extension rods 2710, 2712 may extend into or out of the door 120A depending on movement of the secondary latch button 2706. The extension rods 2710, 2712 may be guided by slide bearings 2602 where the extensions rod 2710, 2712 exit the door 120A. Once latched, the end pieces 3202 may be retained by counterparts in the oven frame. The state of the secondary latch mechanism 2502 may be maintained by a spring plunger 2704 connected to the lever 2708. The spring plunger 2704 may slide over a surface with a defined shape.

Referring now to FIG. 25A, the secondary latch mechanism 2502 in an unlocked position is shown. The secondary latch button 2706 may include an indication (e.g., a colored (e.g., red) portion) that shows when the secondary latch mechanism 2502 is in the unlocked position.

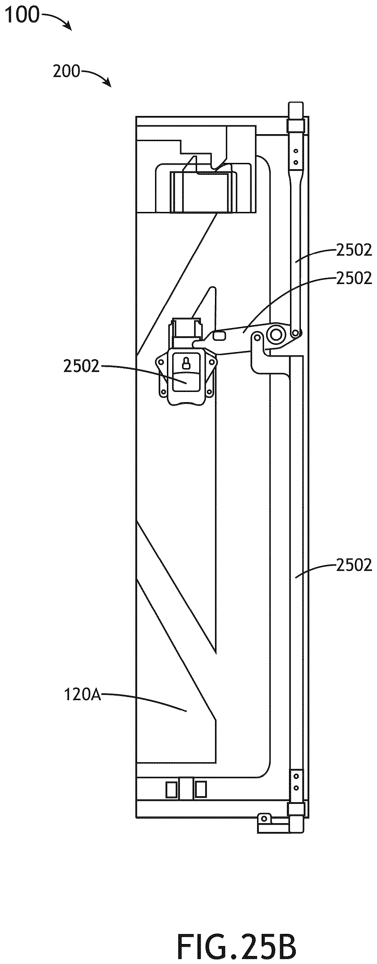

Referring now to FIG. 25B, the secondary latch mechanism 2502 in a locked position is shown. The secondary latch button 2706 may include an indication (e.g., a lock symbol) that shows when the secondary latch mechanism 2502 is in the locked position.

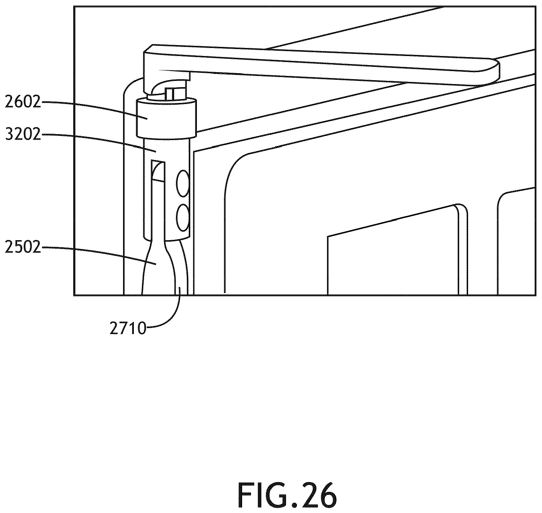

Referring now to FIG. 26, a top portion of the secondary latch mechanism 2502 in the locked position is shown.

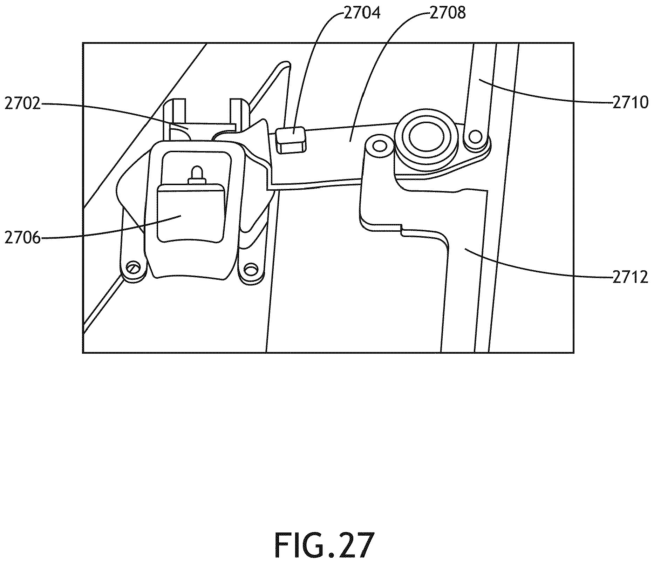

Referring now to FIG. 27, a portion of the secondary latch mechanism 2502 in the locked position is shown.

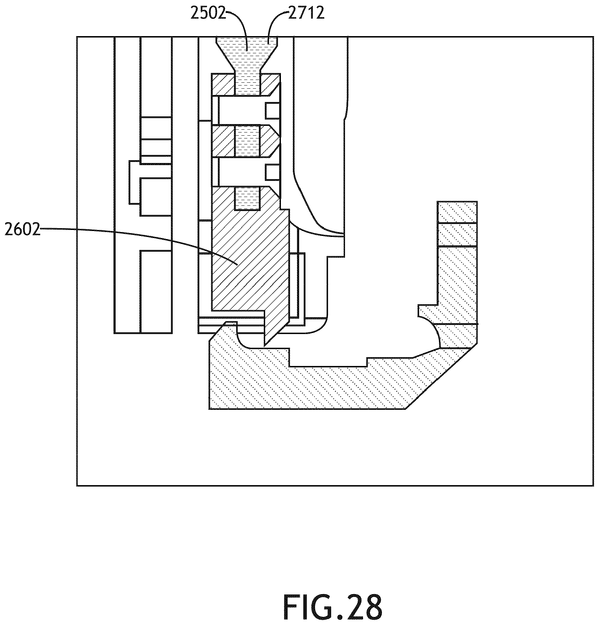

Referring now to FIG. 28, a portion of the secondary latch mechanism 2502 in the locked position is shown.

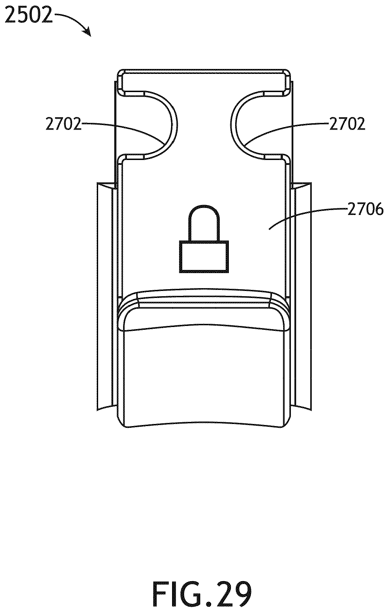

Referring now to FIG. 29, the secondary latch button 2706 may provide an interface for an operator to manually actuate the second latch mechanism 2502.

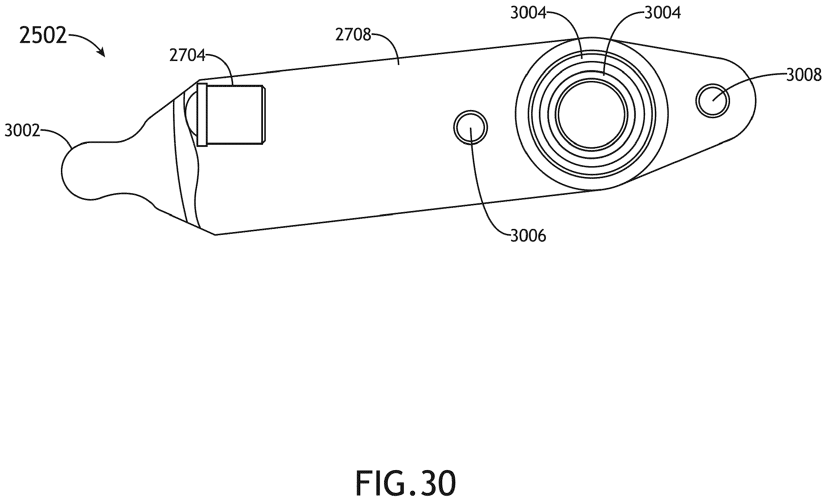

Referring now to FIG. 30, the lever 2708 may rotate around at least one (e.g., two) bearings 3004. The spring plunger 2704 may exert pressure on the lever 2708 via an internal spring. If the lever 2708 rotates upward, the spring plunger 2704 may be pushed inward due to a shape of the lever 2708. Once a thickest point is passed, the spring plunger 2704 may move outward. The thickness in the center of the lever 2708 at the spring plunger 2704 may ensure that the secondary latch mechanism is maintained in respective latch states. The lever 2708 may include a tip 3002 that engages with an indentation 2702 on the secondary latch button 2706.

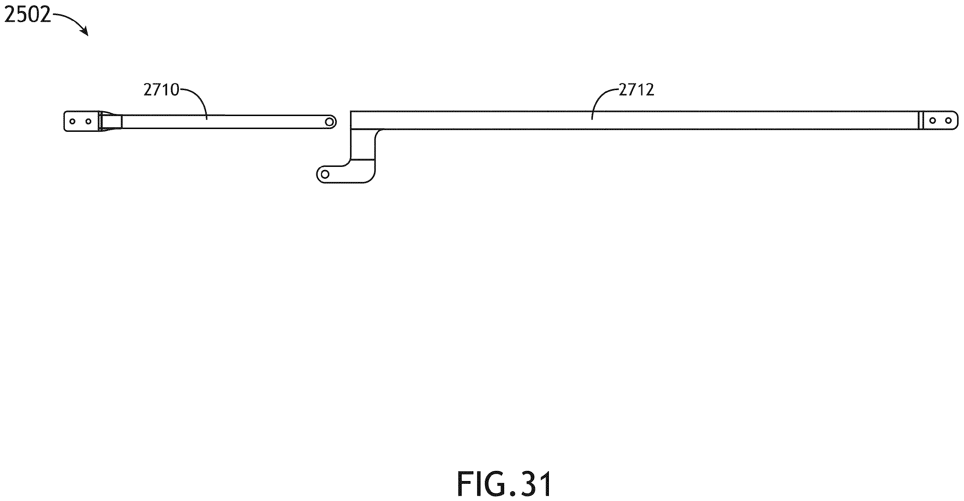

Referring now to FIG. 31, the extension rods 2710, 2712 may transfer the rotational movement of the lever 2708 into a vertical movement of the end pieces 3202.

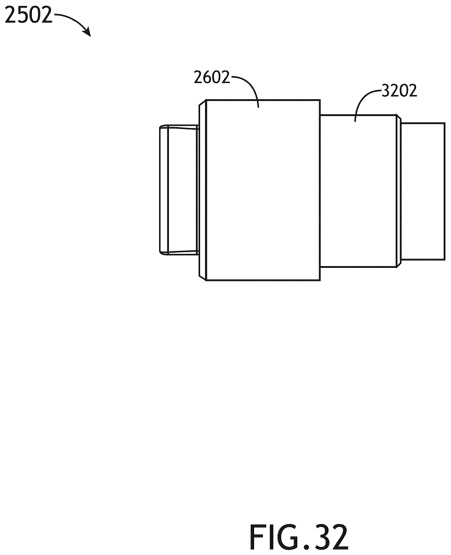

Referring now to FIG. 32, the slide bearings 2602 may provide a load bearing, low friction surface through which the end pieces 3202 are actuated.

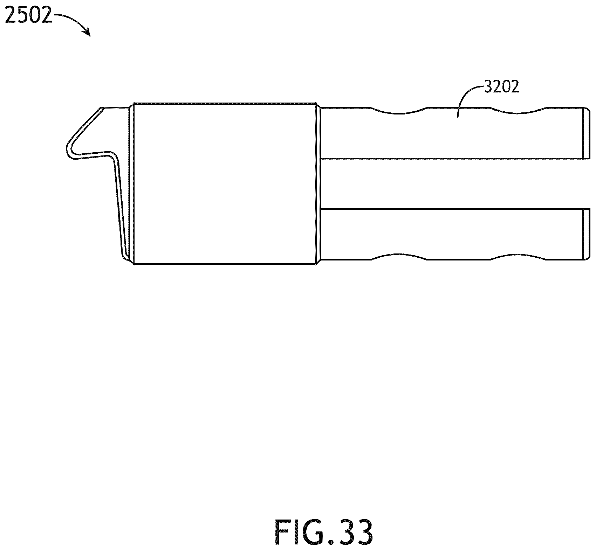

Referring now to FIG. 33, the end pieces 3202 may extend into or out of the door 120A to latch or unlatch the secondary latch mechanism 2502.

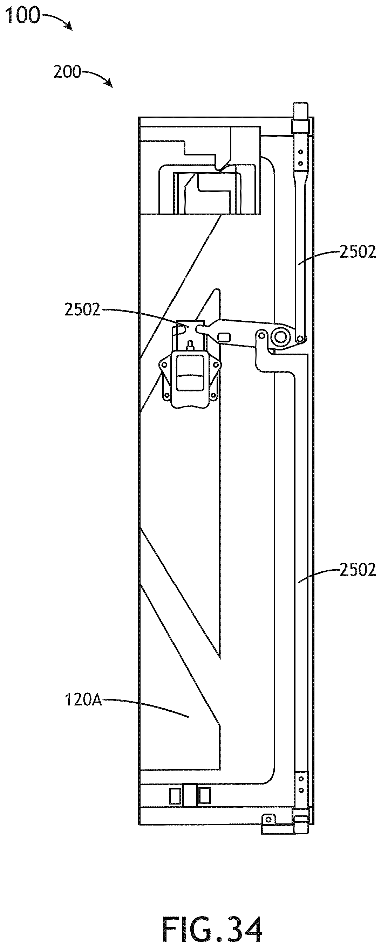

Referring now to FIG. 34, the secondary latch mechanism 2502 in an unlocked position is shown.

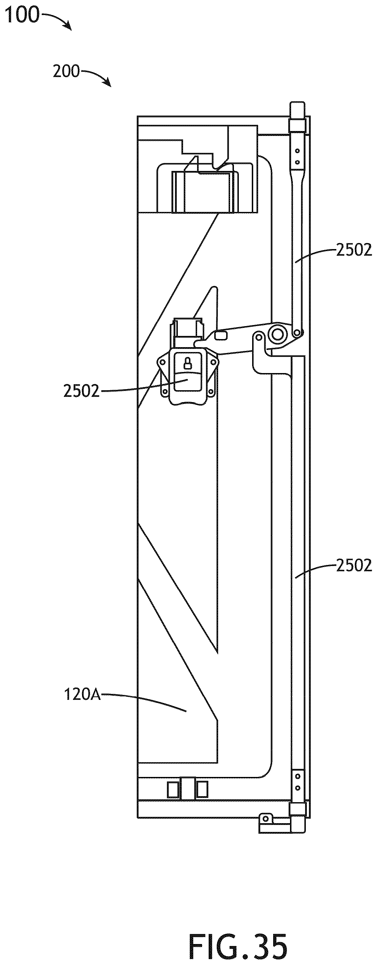

Referring now to FIG. 35, the secondary latch mechanism 2502 in a locked position is shown.

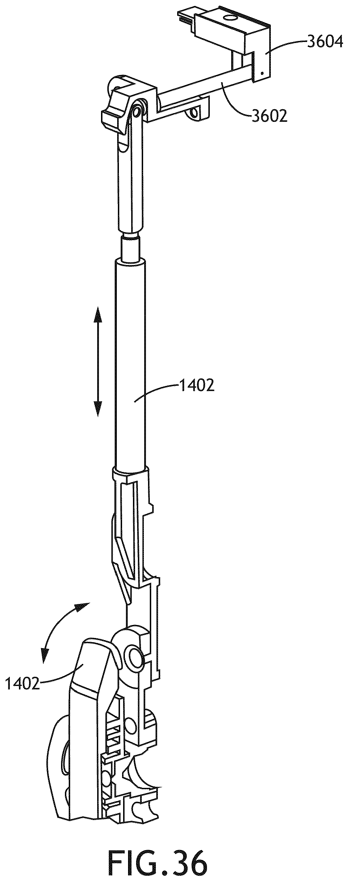

Referring now to FIGS. 36-37, an exemplary embodiment including at least one sensor 3604 for the primary latch mechanism 1402 of FIGS. 14-24 is shown. The system may include the sensor 3604 and/or at least one sensor pin 3602. For example, extension of an end piece 2402 may push the sensor pin 3602 into the sensor 3604, or vice versa. If the primary latch mechanism 1402 is moved into the latched state, the end piece 2402 may move the sensor pin 3602 into the sensor 3604, which may detect if the latched state is achieved and whether the door 120A is closed.

[Deleted].

As used throughout and as would be appreciated by those skilled in the art, "at least one non-transitory computer-readable medium" may refer to as at least one non-transitory computer-readable medium (e.g., memory, storage, or a combination thereof; e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ... , one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are within the scope of the invention as defined by the claims.

## Claims

1. A system, comprising:
a door (120) configured to be installed within a vehicle, the door comprising:
a latch mechanism (122) configured to latch or unlatch the door, wherein the latch mechanism is positionable in a latched position, a neutral position, and an unlatched position, wherein the latch mechanism comprises:
a handle (1702);
a rotatable plate (1704) coupled to the handle, the rotatable plate configured to be rotated by the handle; and
an extension rod (2202),
wherein the rotatable plate (1704) is configured to convert a rotational movement of the handle to linearly move the extension rod causing the door to be latched or unlatched;
**characterized in that**
the latch mechanism further comprises a compression spring (2204), wherein the extension rod passes through the compression spring, wherein the compression spring is configured to maintain the neutral position by accumulating energy when the latch mechanism is in an unlatched or latched state and by returning that energy when the latch mechanism is reversed;
wherein the rotatable plate includes a curved channel (1906), wherein the extension rod has a roller bearing (1904), the roller bearing configured to travel in the curved channel when the latch mechanism changes from one of the latched position, the neutral position, and the unlatched position;
wherein the rotatable plate includes spring plungers (2704);
wherein the latch mechanism further comprises an end piece (2402) connected to the extension rod, wherein the end piece includes a slide bearing (2602) and a roller, the roller positioned at a tip of the end piece; and
wherein the door further comprises a sensor pin (3602) and a sensor (3604), the sensor configured to determine whether the latch mechanism is latched based on a detection of the sensor pin.

2. The system of claim 1, wherein the door is an oven door.

3. The system of claim 1 or 2, wherein the vehicle is an aircraft.

4. The system of claim 1, 2 or 3, wherein the rotatable plate is partially circular.

5. The system of any preceding claim, wherein the latch mechanism further comprises a second extension rod (2712).

6. The system of claim 1, wherein the door further comprises a manually operated secondary latch mechanism (2502) configured to latch or unlatch the door.

7. The system of claim 6, wherein the secondary latch mechanism comprises a secondary latch button (2706), a lever (2708), an extension rod (2710), a slide bearing, and an end piece.

8. The system of claim 7, wherein the secondary latch mechanism is configured to be manually operated by moving the secondary latch button, wherein movement of the secondary latch button is configured to be transferred by the lever to the extension rod by the lever swiveling around a rotation point such that the secondary latch mechanism latches or unlatches.

9. The system of claim 8, wherein the secondary latch mechanism further comprises a spring plunger connected to the lever and configured to maintain a state of the secondary latch mechanism.

10. The system of claim 9, wherein the extension rod is configured to transfer rotational movement of the lever into a vertical movement of the end piece.

## Patentansprüche

1. System, umfassend:
eine Tür (120), die zum Einbau in ein Fahrzeug konfiguriert ist, wobei die Tür Folgendes umfasst:
einen Verriegelungsmechanismus (122), der dazu konfiguriert ist, die Tür zu verriegeln oder zu entriegeln, wobei der Verriegelungsmechanismus in einer verriegelten Position, einer neutralen Position und einer entriegelten Position positionierbar ist, wobei der Verriegelungsmechanismus Folgendes umfasst:
einen Griff (1702);
eine drehbare Platte (1704), die an den Griff gekoppelt ist, wobei die drehbare Platte dazu konfiguriert ist, durch den Griff gedreht zu werden; und
eine Verlängerungsstange (2202),
wobei die drehbare Platte (1704) dazu konfiguriert ist, eine Drehbewegung des Griffs umzuwandeln, um die Verlängerungsstange linear zu bewegen, wodurch bewirkt wird, dass die Tür verriegelt oder entriegelt wird;
**dadurch gekennzeichnet, dass**
der Verriegelungsmechanismus ferner eine Druckfeder (2204) umfasst, wobei die Verlängerungsstange durch die Druckfeder verläuft, wobei die Druckfeder dazu konfiguriert ist, die neutrale Position beizubehalten, indem sie Energie sammelt, wenn sich der Verriegelungsmechanismus in einem entriegelten oder verriegelten Zustand befindet, und diese Energie zurückgibt, wenn der Verriegelungsmechanismus umgekehrt wird;
wobei die drehbare Platte einen gekrümmten Kanal (1906) beinhaltet, wobei die Verlängerungsstange ein Rollenlager (1904) aufweist, wobei das Rollenlager dazu konfiguriert ist, sich in dem gekrümmten Kanal zu bewegen, wenn der Verriegelungsmechanismus aus einer der verriegelten Position, der neutralen Position und der entriegelten Position wechselt;
wobei die drehbare Platte Federkolben (2704) beinhaltet;
wobei der Verriegelungsmechanismus ferner ein Endstück (2402) umfasst, das mit der Verlängerungsstange verbunden ist, wobei das Endstück ein Gleitlager (2602) und eine Rolle beinhaltet, wobei die Rolle an einer Spitze des Endstücks positioniert ist; und
wobei die Tür ferner einen Sensorstift (3602) und einen Sensor (3604) umfasst, wobei der Sensor dazu konfiguriert ist, auf Grundlage einer Detektion des Sensorstifts zu bestimmen, ob der Verriegelungsmechanismus verriegelt ist.

2. System nach Anspruch 1, wobei die Tür eine Ofentür ist.

3. System nach Anspruch 1 oder 2, wobei das Fahrzeug ein Luftfahrzeug ist.

4. System nach Anspruch 1, 2 oder 3, wobei die drehbare Platte teilweise kreisförmig ist.

5. System nach einem der vorhergehenden Ansprüche, wobei der Verriegelungsmechanismus ferner eine zweite Verlängerungsstange (2712) umfasst.

6. System nach Anspruch 1, wobei die Tür ferner einen manuell betätigten sekundären Verriegelungsmechanismus (2502) umfasst, der dazu konfiguriert ist, die Tür zu verriegeln oder zu entriegeln.

7. System nach Anspruch 6, wobei der sekundäre Verriegelungsmechanismus einen sekundären Verriegelungsknopf (2706), einen Hebel (2708), eine Verlängerungsstange (2710), ein Gleitlager und ein Endstück umfasst.

8. System nach Anspruch 7, wobei der sekundäre Verriegelungsmechanismus dazu konfiguriert ist, durch Bewegen des sekundären Verriegelungsknopfs manuell betätigt zu werden, wobei die Bewegung des sekundären Verriegelungsknopfs dazu konfiguriert ist, durch den Hebel auf die Verlängerungsstange übertragen zu werden, indem der Hebel um einen Drehpunkt schwenkt, sodass der sekundäre Verriegelungsmechanischmus verriegelt oder entriegelt wird.

9. System nach Anspruch 8, wobei der sekundäre Verriegelungsmechanismus ferner einen Federkolben umfasst, der mit dem Hebel verbunden und dazu konfiguriert ist, einen Zustand des sekundären Verriegelungsmechanismus beizubehalten.

10. System nach Anspruch 9, wobei die Verlängerungsstange dazu konfiguriert ist, eine Drehbewegung des Hebels in eine vertikale Bewegung des Endstücks zu übertragen.

## Revendications

1. Système, comprenant :
une porte (120) configurée pour être installée dans un véhicule, la porte comprenant :
un mécanisme de verrouillage (122) configuré pour verrouiller ou déverrouiller la porte, dans lequel le mécanisme de verrouillage peut être positionné dans une position verrouillée, une position neutre et une position déverrouillée, dans lequel le mécanisme de verrouillage comprend :
une poignée (1702) ;
une plaque rotative (1704) couplée à la poignée, la plaque rotative étant configurée pour être tournée par la poignée ; et
une tige d'extension (2202),
dans lequel la plaque rotative (1704) est configurée pour convertir un mouvement de rotation de la poignée pour déplacer linéairement la tige d'extension provoquant le verrouillage ou le déverrouillage de la porte ;
**caractérisé en ce que**
le mécanisme de verrouillage comprend en outre un ressort de compression (2204), dans lequel la tige d'extension traverse le ressort de compression, dans lequel le ressort de compression est configuré pour maintenir la position neutre en accumulant de l'énergie lorsque le mécanisme de verrouillage est dans un état déverrouillé ou verrouillé et en retournant cette énergie lorsque le mécanisme de verrouillage est inversé ;
dans lequel la plaque rotative comporte un canal incurvé (1906), dans lequel la tige d'extension a un roulement à rouleaux (1904), le roulement à rouleaux étant configuré pour se déplacer dans le canal incurvé lorsque le mécanisme de verrouillage passe de l'une parmi la position verrouillée, la position neutre, et la position déverrouillée ;
dans lequel la plaque rotative comporte des poussoirs à ressort (2704) ;
dans lequel le mécanisme de verrouillage comprend en outre une pièce d'extrémité (2402) reliée à la tige d'extension, dans lequel la pièce d'extrémité comporte un roulement à glissière (2602) et un rouleau, le rouleau étant positionné à une pointe de la pièce d'extrémité ; et
dans lequel la porte comprend en outre une broche de capteur (3602) et un capteur (3604), le capteur étant configuré pour déterminer si le mécanisme de verrouillage est verrouillé sur la base d'une détection de la broche de capteur.

2. Système selon la revendication 1, dans lequel la porte est une porte de four.

3. Système selon la revendication 1 ou 2, dans lequel le véhicule est un aéronef.

4. Système selon la revendication 1, 2 ou 3, dans lequel la plaque rotative est partiellement circulaire.

5. Système selon une quelconque revendication précédente, dans lequel le mécanisme de verrouillage comprend en outre une seconde tige d'extension (2712).

6. Système selon la revendication 1, dans lequel la porte comprend en outre un mécanisme de verrouillage secondaire actionné manuellement (2502) configuré pour verrouiller ou déverrouiller la porte.

7. Système selon la revendication 6, dans lequel le mécanisme de verrouillage secondaire comprend un bouton de verrouillage secondaire (2706), un levier (2708), une tige d'extension (2710), un roulement à glissière et une pièce d'extrémité.

8. Système selon la revendication 7, dans lequel le mécanisme de verrouillage secondaire est configuré pour être actionné manuellement en déplaçant le bouton de verrouillage secondaire, dans lequel le mouvement du bouton de verrouillage secondaire est configuré pour être transféré par le levier à la tige d'extension par le levier pivotant autour d'un point de rotation de sorte que le mécanisme de verrouillage secondaire se verrouille ou se déverrouille.

9. Système selon la revendication 8, dans lequel le mécanisme de verrouillage secondaire comprend en outre un poussoir à ressort relié au levier et configuré pour maintenir un état du mécanisme de verrouillage secondaire.

10. Système selon la revendication 9, dans lequel la tige d'extension est configurée pour transférer le mouvement de rotation du levier en un mouvement vertical de la pièce d'extrémité.
